# EUROPEAN PATENT SPECIFICATION

(11) **EP 1 931 925 B1**
(45) Date of publication and mention of the grant of the patent: **18.11.2009**
(21) Application number: 06799484.8
(22) Date of filing: 02.10.2006
(51) Int. Cl.: F24J 2/34, F24J 2/50, F24J 2/10

(54) **SOLAR COLLECTOR WITH INTEGRATED HEAT STORAGE**
SONNENKOLLEKTOR MIT INTEGRIERTER WÄRMESPEICHERUNG
CAPTEUR SOLAIRE EQUIPE D'UN DISPOSITIF DE STOCKAGE DE CHALEUR INTEGRE

(30) Priority: 03.10.2005 NL 1030094
(43) Date of publication of application: 18.06.2008
(73) Proprietor: Econcern B.V., 3526 KL Utrecht (NL)
(72) Inventor: SCHAAP, Antonius, Bernardus, NL-1222 LN Hilversum (NL); VAN BOCHOVE, Iwan, Jules, NL-3823 CD Amersfoort (NL)
(74) Representative: Habets, Winand
(86) International application number: PCT/NL2006/000495
(87) International publication number: WO 2007/040389

(56) References cited:
- EP-A1- 0 743 495
- AU-B2- 530 878
- FR-A1- 2 591 323
- US-A- 4 598 450
- SMYTH M ET AL: "Heat retaining integrated collector/storage solar water heaters" SOLAR ENERGY, PERGAMON PRESS. OXFORD, GB, vol. 75, no. 1, July 2003 (2003-07), pages 27-34, XP004458861 ISSN: 0038-092X
- TRIPANAGNOSTOPOULOS Y ET AL: "CPC type integrated collector storage systems" SOLAR ENERGY, PERGAMON PRESS. OXFORD, GB, vol. 72, no. 4, April 2002 (2002-04), pages 327-350, XP004349459 ISSN: 0038-092X

## Description

The present invention relates to a solar collector having an integrated heat storage, said solar collector comprising a housing which comprises a bottom plate and a transparent cap, where in the housing between an involute mirror and the transparent cap a storage tank for storage of water is disposed, the solar collector being arranged to be at an angle with the horizontal such that the storage tank has a higher end and a lower end, and wherein between the storage tank and the transparent cap a shielding is provided for reducing heat losses, said shielding being arranged at the higher end, between the storage tank and the transparent cap, and the shielding covering at least part of the higher end of the storage tank such that at the higher end convection between the storage tank and the transparent cap is inhibited, wherein the shielding leaves at least part of the lower end uncovered, and wherein 20 to 60% of the volume of the storage tank is covered by the shielding.

Solar collectors having an integrated heat storage are known in the art, also by the abbreviation ICS. Such a solar collector has an elongated shape in which an elongated storage tank is situated. This storage tank is designed to absorb solar heat. The absorbed heat heats medium present in the storage tank, most often water. In order to increase the thermal yield, an involute mirror that faces the transparent cap is arranged below the storage tank by means of which the storage tank can receive and absorb light radiation from its bottom as well. By using such a solar collector, water in the storage tank can be heated which subsequently may be used for various purposes, usually domestic purposes. In particular it can be used for taking a bath or a shower, doing the dishes and the like. EP0743495 discloses a solar collector with a storage container for the medium to be heated which is arranged in a housing with a transparent wall and a mirror surface, said container being enclosed with an interspace by a transparent insulating sleeve. Another ICS with a shielding is known from US4598450, in which at the beginning of column 13 the possibility to provide a shielding at the upper end of the storage tank is mentioned. As a result, a higher thermal yield is achieved. The costs of materials compared to fully shielding are reduced. In spite of the reduced size of the shielding it appears that, as a result of the increased thermal yield, the heat losses (in particular those which occur during the night), do not negatively affect a good performance with respect to tapping. That is to say, also in the morning there is enough' water available at a sufficient temperature.

Even though it has been tried for years to get solar energy adopted, in most cases hot water is still obtained by using high-grade energy carriers such as gas and electricity. Using these high-grade energy carriers to generate low-grade energy is in fact a waste. For a greater part this situation is based on financial considerations. In order to reach a greater adoption of solar energy, it thus has to be able to economically compete with conventional energy carriers in a better way. Another important issue is that hot water should be available to a large extent and be strongly independent of the points in time at which hot water is tapped. The use of the shielding greatly contributes thereto.

In accordance herewith is it an objective of the present invention to provide a solar collector having an integrated heat storage that offers an increased yield and improved performance with respect to the point in time at which the hot water is used.

To this end the solar collector according to the invention is characterized in that the shielding leaves at least part of the lower end uncovered whereby 20 to 60% of the volume of the storage tank is covered by the shielding, and an imaginary plane through the central axis of the storage tank, which plane is parallel with respect to the plane of the involute mirror, divides the shielding into a part situated near the transparent cap and a part near the involute mirror, wherein the volume of the storage tank encompassed by said first part is at least 15% larger than that of said latter part.

Thus, heat losses as a result of convection at the upper part of the vessel are counteracted, while loss of light as a result of reflection against the shielding is avoided. It has been found that an increased yield can be accomplished in this way, while using less material for the shielding. Thanks to the shielding, the content of the storage tank can maintain its temperature for a longer period of time, so that in the morning as well sufficient and/or more often sufficient hot water is available, or the necessity of after heating is reduced.

Strictly speaking the term "involute" indicates a mathematically precisely defined curve, but within the scope of the present invention it includes any shape that reflects light onto the storage tank and preferably a concave shape, more preferably a light concentrating shape, and most preferably a mathematically determined involute shape.

AU 530 878 (published in 1983) describes a solar collector, not being of the ICS type, having a shielding of a mantle shaped pipe system within the housing.

A preferred embodiment is characterized in that at least part of the surface of the shielding is optically transparent.

Thus the local incidence of light can be used, albeit not completely due to reflection against the shielding but nevertheless for a very large part, for heating the water in the storage tank.

In such a case it is nonetheless preferred that part of the shielding is optically opaque, such that 2 to 5% of the most highly situated volume of the storage tank, is enclosed by the optically opaque part.

This also prevents the water from getting overheated.

An important preferred embodiment is characterized in that said first part covers at least 30%, and more preferably at least 50%, more volume than the second part.

Advantageously, this embodiment is characterized in that the shielding has a lower edge that is substantially horizontal, that is, having an angle of 10° at the most with respect to the horizontal.

In this way air is trapped effectively. In other words: heat losses as a result of convection are greatly reduced.

Preferably the shielding is fashioned out of polycarbonate.

Polycarbonate can be shaped easily, has a favourable optical transmission and in particular a good heat resistance.

Finally, the invention relates to a method for placing a solar collector according to the invention, which is characterized in that it is positioned such that the lower edge of the shielding forms an angle with the horizontal of ±30° at the most, preferably ±20° at the most and most preferably not exceeding ±10°.

In this way hot air remains trapped optimally under the shielding, while solar radiation reflected by the mirror can reach the storage tank at the side of the involute mirror to a large extent.

The present invention will now be illustrated with reference to the drawing, in which
fig. 1 represents a top plan view of a solar collector according to the invention;
fig. 2 represents a cross section of the solar collector of fig. 1 along line II-II; and
fig. 3 represents a cross section of the solar collector of fig. 1 along line III-III.

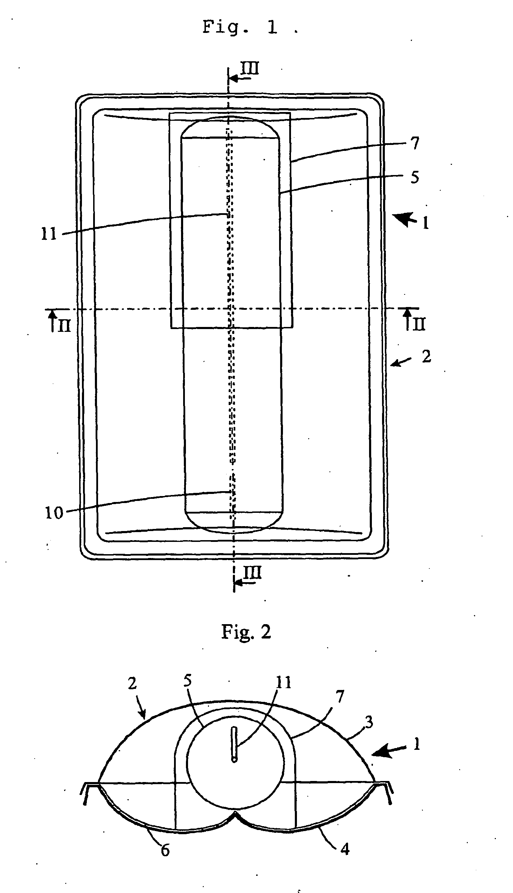

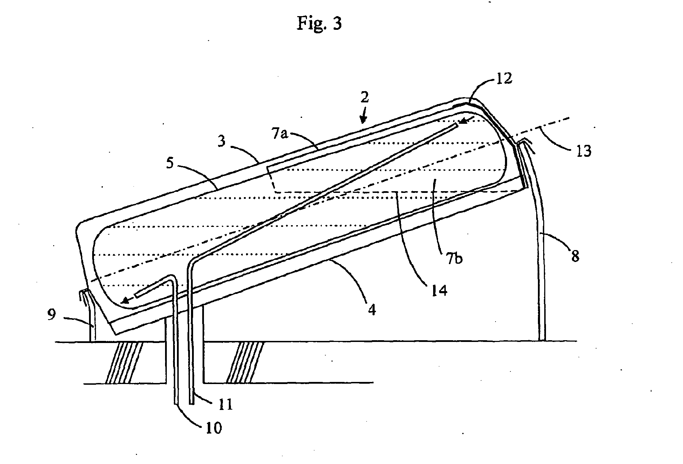

In fig. 1 a top view of a solar collector 1 according to the invention is shown. The solar collector 1 comprises a housing 2 which comprises a transparent cap 3, which is suitably manufactured out of perspex, and a bottom plate 4 (fig. 2 and 3). Within the housing 2 a storage tank 5 is situated. During operation, this storage tank 5 is directly heated by solar radiation and in order to efficiently absorb this, it is provided with an absorbing layer (not shown further), which is known in itself. The absorbing layer is, for example, a spectral selective coating which radiates little heat. Such a coating is known from DE4433863. In order to increase the thermal yield, the solar collector 1 also comprises a mirror 6, preferably a mathematically involute mirror 6. This concentrates light and reflects it onto the storage tank 5, also onto the bottom thereof. For feeding of (cold) water, a feed pipe 10 is provided which discharges in the lowest part of the storage tank 5. For the discharge of (hot) water a discharge pipe 11 is provided, which has an inlet at the higher end of the storage tank 5. The solar collector described so far is known from the prior art.

In accordance with the present invention a shielding 7 is provided at the higher end, between the storage tank 5 and the transparent cap 3. In accordance with a possible embodiment the shielding is made of insulating material, such as glass wool, mineral wool etc. Insulating material is in particular useful in those countries where a lot of radiant energy is available per se (e.g. Spain), but where heat radiation during the night leads to a large drop of the water temperature. In addition, by using a shielding 7 in the form of an insulating material, the likelihood of overheating of the upper water layer in the storage tank 5 is reduced since the volume of water covered by the insulating material will be more homogenous with respect to its temperature.

In order to optimally use the surface of the solar collector it is preferred, however, that the shielding is optically transparent.

The shielding 7 takes up at least part of the higher end of the storage tank 5, such that convection between the storage tank and the transparent cap 3 is inhibited at the higher end. It is essential that the shielding 7 not only leaves uncovered at least part of the lower end of the storage tank 5, but also increases the access of solar radiation to the storage tank at the side of the involute mirror, as a result of which light can reach the storage tank 5 without hindrance, thanks to the part that is left free. Comparing the known solar collector to the present invention, the latter has less loss of light, heat losses are counteracted effectively, especially at the location where the storage tank 5 is hottest and thus loses the most heat - being the water that will be used by the consumer - and it saves materials since the shielding 7 is smaller. Where in the present application in conjunction with the term "shielding" the covering of a volume of the storage tank is mentioned, then the open bottom of the shielding is regarded to be a limiting plane of the volume of content of the shielding. That part of the volume of the storage tank that is present within the shielding defined as here, is the volume encompassed by the shielding. Where in the present application a plane parallel to the involute mirror is mentioned, it will be easy for the person of ordinary skill in the art to determine the location of a flat plane that complies therewith. The ordinary person skilled in the art could use math to do so, but the practitioner having a more practical attitude will use the basic knowledge that when the surface of the shadow of a mirror that is turned towards the sun is the greatest, the mirror and a flat plate, which is also held such that its shadow is at its greatest, are parallel relative to each other.

The solar collector 1 according to the invention will be positioned such that the storage tank 5 is at an angle. For arrangement on the floor or on a flat roof or the like (fig. 3), the solar collector 1 will be provided with legs 8, 9 or the like. It is also possible to position the solar collector 1 with one end on an elevation, such as a small wall. The solar collector 1 may also be positioned on the sloped roof of a house.

When positioning the solar collector 1 according to the invention such that the storage tank 5 is at an angle, an increased yield will be achieved, as is known per se. Not only because of a better absorption of solar radiation (in areas outside the tropics), but also by more effiently using the formation of layers of hot water on top of water that is less hot. However, in case of an optically transparent shielding according to the invention, this could cause the problem of the water in the highly situated end of the storage tank 5 starting to boil. In accordance with a preferred embodiment therefore a part 12 of the shielding 7 is optically opaque such that 2 to 5% of the most highly situated volume of the storage tank 5 is covered by the optically opaque part 7.

In figure 3 a preferred embodiment of the solar collector according to the invention is shown. An imaginary plane 13 through the central axis of the storage tank 5, divides the shielding 7 in an upper part 7a and a lower part 7b, wherein the volume of the part of the storage tank 5 covered by the upper part 7a is larger than that of the lower part 7b. The upper part 7a holds the air which otherwise, due to convection, would reach the cap 3 where it would give off heat to the environment. Advantageously, the lower edge 14 of the shielding 7 is substantially horizontal, that is, having an angle of ±30° at the most, preferably ±20° at the most and most preferably not exceeding ±10° relative to the horizontal, after positioning the solar collector. In the embodiment illustrated in fig. 3 the angle forming the lower edge with the horizontal is approximately 6°. As will be clear to the practitioner, for that matter, an angle with the horizontal is any angle, whether it is positive (ascending) or negative (descending). By now and then using the ± symbol this aspect is underlined. As will be clear to the person of ordinary skill in the art, the lower edge is that edge of the shielding that mainly determines the capture of hot air under the shielding. The angle is determined by the lowest and the highest part of that edge.

## Claims

1. Solar collector having an integrated heat storage, said solar collector comprising a housing (2) which comprises a bottom plate (4) and a transparent cap (3), where in the housing (2) between an involute mirror (6) and the transparent cap (3) a storage tank (5) for storage of water is disposed, the solar collector being arranged, in use, to be at an angle with the horizontal such that the storage tank (5) has a higher end and a lower end, and wherein between the storage tank (5) and the transparent cap (3) a shielding (7) is provided for reducing heat losses, said shielding (7) being arranged at the higher end, between the storage tank (5) and the transparent cap (3), and the shielding (7) covering at least part of the higher end of the storage tank (5) such that at the higher end convection between the storage tank (5) and the transparent cap (3) is inhibited **characterized in that** the shielding (7) leaves at least part of the lower end uncovered whereby 20 to 60% of the volume of the storage tank (5) is covered by the shielding (7), and an imaginary plane (13) through the central axis of the storage tank (5), which plane is parallel with respect to the plane of the involute mirror (6), divides the shielding (7) into a part (7a) situated near the transparent cap (3) and a part (7b) near the involute mirror (6), wherein the volume of the storage tank (5) encompassed by said first part (7a) is at least 15% larger than that of said latter part (7b).

2. Solar collector according to claim 1, wherein at least part of the surface of the shielding (7) is optically transparent.

3. Solar collector according to claim 2, wherein part of the shielding (7) is optically opaque, such that 2 to 5% of the most highly situated volume of the storage tank (5), is covered by the optically opaque part.

4. Solar collector according to any of the preceding claims, **characterized in that** said first part (7a) covers at least 30%, and more preferably at least 50%, more volume than the second part (7b).

5. Solar collector according to any of the preceding claims, **characterized in that** the shielding (7) has a lower edge that is substantially horizontal, that is, having an angle of 20° at the most with respect to the horizontal.

6. Solar collector according to claim 5, **characterized in that** the lower edge is at an angle of 10° at the most with respect to the horizontal.

7. Solar collector according to any of the preceding claims, **characterized in that** the shielding (7) is fashioned out of polycarbonate.

8. Method for placing a solar collector according to any of the claims 1 to 7, **characterized in that** it it is positioned such that the lower edge of the shielding (7) is at an angle with the horizontal of ±30° at the most, preferably ±20° at the most and most preferably not exceeding ±10°.

## Patentansprüche

1. Sonnenkollektor mit einem integrierten Wärmespeicher, wobei der Sonnenkollektor ein Gehäuse (2) beinhaltet, welches eine Bodenplatte (4) und eine transparente Abdeckplatte (3) beinhaltet, wobei in dem Gehäuse (2) zwischen einem rinnenartigen Spiegel (6) und der transparenten Abdeckplatte (3) ein Vorratsbehälter (5) zum Lagern von Wasser vorgesehen ist, der Sonnenkollektor bei Gebrauch in einem Winkel mit der Horizontalen so angebracht ist, dass der Vorratsbehälter (5) ein höheres und ein niedrigeres Ende aufweist, und wobei zwischen dem Vorratsbehälter (5) und der transparenten Abdeckplatte (3) eine Abschirmung (7) zur Reduzierung von Wärmeverlusten vorgesehen ist, diese Abschirmung (7) an dem höheren Ende zwischen dem Vorratsbehälter (5) und der transparenten Abdeckplatte (3) angeordnet ist, und die Abschirmung (7) mindestens teilweise das höhere Ende des Vorratsbehälters (5) abdeckt, so dass am höheren Ende Konvektion zwischen dem Vorratsbehälter (5) und der transparenten Abdeckplatte (3) verhindert wird, **dadurch gekennzeichnet, dass** die Abschirmung (7) mindestens teilweise das niedrige Ende freigibt, wobei 20 bis 60% des Volumens des Vorratsbehälters (5) von der Abschirmung (7) abgedeckt ist, und wobei eine imaginäre Ebene (13) durch die Mittelachse des Vorratbehälters (5), welche parallel zur Ebene des rinnenartigen Spiegels (6) verläuft, die Abschirmung (7) in einen Bereich (7a) nahe der transparenten Abdeckplatte (3) und einen Bereich (7b) nahe des rinnenartigen Spiegels (6) teilt, wobei das Volumen des Vorratsbehälters (5), welches von dem ersten Bereich (7a) umfasst wird, mindestens 15% größer ist als das des zweiten Bereichs (7b).

2. Sonnenkollektor nach Anspruch 1, wobei die Oberfläche der Abschirmung (7) mindestens teilweise optisch transparent ist.

3. Sonnenkollektor nach Anspruch 2, wobei die Abschirmung (7) teilweise optisch undurchsichtig ist, so dass 2 bis 5% des Volumens des Vorratsbehälters (5), welches am höchsten angeordnet ist, von dem optisch undurchsichtigen Bereich abgedeckt ist.

4. Sonnenkollektor nach einem der Ansprüche 1 bis 3, **dadurch gekennzeichnet, dass** der erste Bereich (7a) mindestens 30%, insbesondere 50% mehr Volumen abdeckt als der zweite Bereich (7b).

5. Sonnenkollektor nach einem der Ansprüche 1 bis 4, **dadurch gekennzeichnet, dass** die Abschirmung (7) eine untere Kante aufweist, welche im Wesentlichen horizontal verläuft, maximal jedoch einen Winkel von 20° im Bezug auf die Horizontale aufweist.

6. Sonnenkollektor nach Anspruch 5, **dadurch gekennzeichnet, dass** die untere Kante einen Winkel von maximal 10° im Bezug auf die Horizontale aufweist.

7. Sonnenkollektor nach einem der Ansprüche 1 bis 6, **dadurch gekennzeichnet, dass** die Abschirmung (7) aus Polycarbonat besteht.

8. Verfahren zur Anbringung eines Sonnenkollektors nach einem der Ansprüche 1 bis 7, **dadurch gekennzeichnet, dass** er so positioniert wird, dass die untere Kante der Abschirmung (7) in einem Winkel von maximal ±30°, insbesondere maximal ±20° und bevorzugterweise maximal ±10° in Bezug auf die Horizontale angeordnet ist.

## Revendications

1. Capteur solaire ayant un dispositif de stockage de chaleur intégré, ledit capteur solaire comportant un logement (2) qui comporte une plaque de fond (4) et un couvercle transparent (3), un réservoir de stockage (5) pour le stockage de l'eau disposé dans le logement (2) entre un miroir développable (6) et le couvercle transparent (3), le capteur solaire étant, en utilisation, agencé de manière à former un angle avec l'horizontale de telle sorte que le réservoir de stockage (5) ait une extrémité plus élevée et une extrémité moins élevée, une structure (7) formant écran étant disposée entre le réservoir de stockage (5) et le couvercle transparent (3) pour réduire des pertes de chaleur, ladite structure (7) formant écran étant située à l'extrémité plus élevée, entre le réservoir de stockage (5) et le couvercle transparent (3), et la structure (7) formant écran recouvrant au moins une partie de l'extrémité plus élevée du réservoir de stockage (5) de telle sorte qu'à l'extrémité plus élevée, une convection entre le réservoir de stockage (5) et le couvercle transparent (3) soit empêchée, **caractérisé en ce que** la structure (7) formant écran laisse au moins une partie de l'extrémité inférieure découverte de telle sorte que 20 à 60% du volume du réservoir de stockage (5) soit recouvert par la structure (7) formant écran, et qu'un plan imaginaire (13) passant par l'axe central du réservoir de stockage (5), lequel plan est parallèle au plan du miroir développable (6), divise la structure (7) formant écran en une partie (7a) située près du couvercle transparent (3) et en une partie (7b) située près du miroir développable (6), de telle sorte que le volume du réservoir de stockage (5) recouvert par ladite première partie (7a) est au moins 15% supérieur à celui de ladite dernière partie (7b).

2. Capteur solaire selon la revendication 1, dans lequel au moins une partie de la surface de la structure (7) formant écran est optiquement transparente.

3. Capteur solaire selon la revendication 2, dans lequel une partie de la structure (7) formant écran est optiquement opaque, de telle sorte que de 2 à 5% du volume du réservoir de stockage (5) situé le plus en hauteur, soit recouvert par la partie optiquement opaque.

4. Capteur solaire selon l'une des revendications précédentes, **caractérisé en ce que** ladite première partie (7a) recouvre au moins 30%, et de préférence au moins 50%, de volume en plus que la deuxième partie (7b).

5. Capteur solaire selon l'une des revendications précédentes, **caractérisé en ce que** la structure (7) formant écran a un bord inférieur qui est essentiellement horizontal, c'est-à-dire, ayant un angle de 20° au plus par rapport à l'horizontale.

6. Capteur solaire selon la revendication 5, **caractérisé en ce que** le bord inférieur s'étend selon un angle de 10° au plus par rapport à l'horizontale.

7. Capteur solaire selon l'une des revendications précédentes, **caractérisé en ce que** la structure (7) formant écran est façonnée dans du polycarbonate.

8. Procédé pour positionner un capteur solaire selon l'une des revendications 1 à 7, **caractérisé en ce que** l'on positionne le capteur solaire de telle sorte que le bord inférieur de la structure (7) formant écran forme avec l'horizontale un angle de ±30° au plus, de préférence ±20° au plus et de manière la plus préférée, n'excédant pas ±10°.
